Europäisches Patentamt

**European Patent Office**

Office européen des brevets

(11) Publication number: **0 198 281**
**B1**

(12) **EUROPEAN PATENT SPECIFICATION**

(45) Date of publication of patent specification: **13.12.89**

(21) Application number: **86104069.9**

(22) Date of filing: **25.03.86**

(51) Int. Cl.⁴: **G 21 C 3/32**

(54) **Nuclear fuel assembly with a removable top nozzle.**

(30) Priority: **04.04.85 US 720207**

(43) Date of publication of application:
**22.10.86 Bulletin 86/43**

(45) Publication of the grant of the patent:
**13.12.89 Bulletin 89/50**

(84) Designated Contracting States:
**BE DE FR GB IT SE**

(56) References cited:
**EP-A-0 110 090**
**DE-A-1 810 228**
**DE-A-2 428 980**
**FR-A-2 181 014**
**FR-A-2 531 257**

(73) Proprietor: **WESTINGHOUSE ELECTRIC CORPORATION**
**Westinghouse Building Gateway Center**
**Pittsburgh Pennsylvania 15222 (US)**

(72) Inventor: **Stucker, David Lee**
**730 Bar Harbor Drive**
**Pittsburgh Pennsylvania 15239 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

## Description

The present invention relates generally to a nuclear fuel assembly and, more particularly, to improved means for attaching a top nozzle to the skeletal structure of a nuclear fuel assembly.

In most nuclear reactors, the core portion comprises a large number of fuel assemblies including elongate fuel elements grouped together in bundles and supported by a skeletal framework. The fuel assemblies are elongate structures which are supported by and between upper and lower core support plates. As part of the skeletal structure, conventional fuel assemblies generally include control-rod guide thimbles held by transverse spacer grids spaced along the fuel assembly and attached to the guide thimbles. Top and bottom nozzles typically are secured to the guide thimbles at the opposite ends thereof.

Whenever it is desired to access the fuel rods for the purpose of inspecting and/or replacing them, for example, it is necessary to remove the top nozzle which, in turn, requires detaching it from the guide thimbles. Several types of reconstitutable fuel assemblies have been devised, many of which employ threaded arrangements for attaching the top nozzle to the guide thimbles (see U.S. patents Nos. 3992259 and 3828868, for example). Threaded attaching arrangement are rather costly to fabricate, and they tend to become corroded during use due to their prolonged exposure to irradiation; once corroded, such threaded arrangements can be released only through the application of destructive force which invariably will damage the attaching means to the point of rendering them unsuitable for re-use. Moreover, destructive force applied to break corroded thread connection can even ruin the skeletal structure of the fuel assembly, thus requiring it to be replaced. Another way of attaching a top nozzle to guide thimbles is disclosed in U.K. patent specification GB-A-1228610; it involves inserting end portions of the guide thimbles into passageways formed in the adapter plate of the top nozzle, and then expanding circumferential portions of the inserted guide thimble portions into grooves or the like formed in the walls of the passageways. Bulge-fitting the top nozzle to the guide thimbles in this manner is preferred to threaded connections but it also can make the subsequent removal of the top nozzle a time-consuming and not altogether easy operation to perform.

It is the principal object of the invention to provide top-nozzle attaching means which will permit a top nozzle to be removed and remounted quickly and with relative ease, and which do not involve the use of loose parts.

The invention accordingly relates to a nuclear fuel assembly as defined in claim 1.

The guide thimble is slip-fit into an aperture in the adapter plate of the top nozzle, and said first means comprises a collar which is fixedly disposed on the guide thimble so as to underlie the adapter plate and to support the top nozzle. Thus, compressive loads applied to the top nozzle by hold-down springs are transferred through the collar to the guide thimble which forms part of the skeletal structure of the fuel assembly. The tensive-load transferring means comprises an upwardly extending skirt portion of the spacer grid, and interlocking means for releasably locking the skirt portion to the top nozzle in a manner such that tensive loads applied to the top nozzle are transferred through the skirt portion to the spacer grid and, through the latter, to the guide thimble which is attached thereto.

It will be appreciated that removal of the top nozzle of the fuel assembly embodying the invention requires merely a release of the skirt portion from its engagement with the top nozzle whereupon the latter, being only slip-fit to the guide thimble, is free to be lifted therefrom.

Preferred embodiments of the invention will now be described, by way of example only, with reference to the accompanying drawings, in which:

Figure 1 is a partially sectioned, elevational view, with parts broken away for clarity, of a fuel assembly embodying the invention;

Figure 2 is a partially sectioned, elevational view of a portion of the fuel assembly of Fig. 1 showing the attachment between the top spacer grid and the top nozzle;

Figure 2A is an enlarged view of the encircled portion of Fig. 2;

Figure 3 is an elevational partial view of a modified top nozzle and a combination releasing-and-lifting tool for use therewith;

Figure 4 is a partly sectional elevational view of the uppermost spacer grid with modified attachment means; and

Figures 5A and 5B are elevational views, partly in section, of a portion of the top nozzle of Fig 3, the spacer grid of Fig. 4, and the combination tool as employed to release the top nozzle (Fig. 5A) and to lift it (Fig. 5B).

In the following description, like reference characters designate like or corresponding parts throughout the several views, and terms such as "forward", "rearward", "left", "right", "upwardly", "downwardly", and the like, are employed as words of convenience not to be construed as limiting terms.

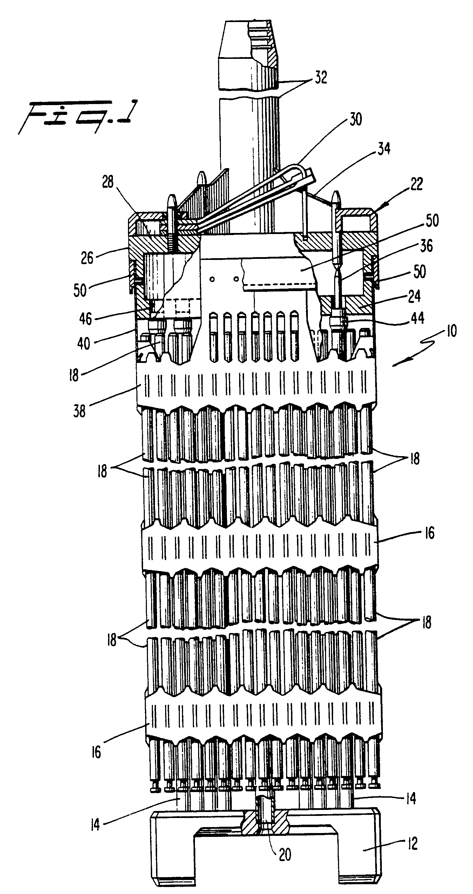

Referring now to the drawings, and particularly to Fig. 1, the fuel assembly illustrated therein and designated generally with reference numeral 10 basically comprises a lower end structure or bottom nozzle 12 for supporting the assembly on the lower core plate (not shown) in the core region of a reactor (not shown), control-rod guide thimbles 14 extending from the bottom nozzle 12 upwards in the longitudinal direction of the fuel assembly, transversely extending fuel-rod spacer grids 16 spaced apart along the guide thimbles 14, an organized array of elongate fuel rods 18 laterally spaced and supported by the spacer grids 16, an instrumentation tube 20, and an upper end structure or top nozzle 22 mounted on upper end portions of the guide thimbles 14 in a manner still to be fully described.

The top nozzle 22 includes a transverse adapter plate 24 having sidewalls 26 which extend upwards from the peripheral edges thereof so as to define an enclosure or housing, and which have at their top a lateral flange 28. Suitably clamped to the flange 28 are hold-down springs 30 (only one is shown) adapted to cooperate with the upper core plate (not shown) to prevent hydraulic lifting of the fuel assembly, caused by upward flow of coolant through the assembly, while allowing for variations in the fuel assembly length due to core-induced thermal expansion and the like. Supported on the top nozzle is a conventional rod cluster control assembly 32 having radial flukes 34 which are connected to the upper ends of control rods 36 guided in the guide thimbles 14 for axial movement therein, as well known in the art. With the exception of the top spacer grid 38, the spacer grids 16 are of conventional design.

For assembling the fuel assembly 10, the spacer grids 16 are attached to the guide thimbles 14 at predetermined axially spaced locations, whereupon the fuel rods 18 are inserted through the various cells of the spacer grids 16. The lower nozzle 12 is suitably fastened to the lower ends of the guide thimbles 14, and the top nozzle 22 is then mounted on upper end portions of the guide thimbles 14 and secured in place in a manner set forth hereinbelow.

The top-nozzle attaching structure embodying the invention will now be described with particular reference to Figs. 1, 2, 2a and 3. Basically, it comprises compressive-load transferring means and tension-load transferring means for transferring compressive loads (as applied by the hold-down springs 30) and tensive loads (as applied when the whole fuel assembly is bodily lifted and moved by its top nozzle) between the top nozzle 22 and the remaining skeletal structure comprising the control-rod guide thimbles 14, the spacer grids 16 and 38, and the bottom nozzle 12. In the preferred embodiments to be discussed, the compressive-load transferring means comprise top-nozzle supporting or load collars 44 disposed on the various guide thimbles 14, and the tension-load transferring means comprise upward extensions or skirts 40 on the uppermost spacer grid 38 which are adapted to be releasably interlocked with the top nozzle 22.

More specifically, and as seen from Figs. 1, 2 and 5, the guide thimbles 14 have upper end portions thereof slidably (i.e. with some radial clearance of, say, 50 microns) inserted into passageways or apertures 46 formed in the adapter plate 24 of the top nozzle 22. Each of the nozzle-supporting load collars 44 is disposed on one of the guide thimbles proximate to but spaced from the upper end thereof, and is radially dimensioned to engage the lower surface of the adapter plate 24 and thereby support the top nozzle. The load collars 44 on the various guide thimbles 14 are all disposed substantially at the same level. Preferably, at least the upper end portion of each guide thimble 14 is formed of stainless steel, and it may have the associated load collar 44 either formed integral therewith or secured, e.g. brazed or welded, thereto as a sleeve preferably made of stainless steel. From the foregoing, it will be appreciated that the top nozzle 22 is seated upon the load collars 44 without being affixed and rigidly connected to the guide thimble end portions extending in a slip-fit manner into the respective passageways 46 of its adapter plate 24. This will permit the top nozzle, once released for removal in a manner still to be described, simply to be lifted off the guide thimbles whenever it is desired to gain access to the fuel rods 18. While in use, and with the upper reactor core plate (not shown) bearing down on the hold-down springs 30, the resultant compressive load applied by the adapter plate 24 to the load collars 44 is transmitted through the latter to the guide thimbles which are conventionally attached, e.g. bulge-fit, to the spacer grids 16 and 38 and are secured to the bottom nozzle 12, thereby forming part of the skeletal framework of the fuel assembly.

As mentioned hereinbefore, tensive loads occurring when the whole fuel assembly is bodily lifted by its top nozzle are transferred to the skeletal structure by the upwardly extending skirt portions 40 of the uppermost spacer grid 38 which, as mentioned above, is fastened to the guide thimbles 14. The skirt portions may have any suitable geometry enabling them to mechanically support the fuel assembly under tensive loading while permitting adequate coolant flow therethrough. In the preferred embodiment illustrated, the spacer grid 38 has four such skirt portions 40 (only three are shown) spaced uniformly about its periphery, each of the skirt portions 40 extending from the spacer grid upwards and alongside one of the sidewalls 26 of the top nozzle 22, and having associated therewith interlocking means for releasably but securely locking the skirt portion 40 to the top nozzle in a manner enabling the spacer grid 38 to accommodate tensive loading.

As shown in Figs. 1 to 2A, the interlocking means associated with the respective skirt portions 40 comprise apertures 42 formed in upperparts of the skirt portions 40, apertures 48 formed in the sidewalls 26 of the top nozzle 22 and disposed in axial alignment with the respective apertures 42 when the top nozzle is properly mounted in place, and spring-steel tangs 50 disposed on the top nozzle sidewalls 26 in overlying relationship with respect to the apertures 48 formed therein and with sufficient clearance between each tang 50 and the adjacent sidewall to receive the associated skirt portion 40 therebetween, each tang 50 carrying a pin 52 which extends through the aperture 42 in the skirt portion 40 and into the aligned aperture 48 in the adjacent sidewall 26. The tangs 50 may be formed integral with or may be secured, e.g. welded, to the respective sidewalls 26 or the lateral flange 28.

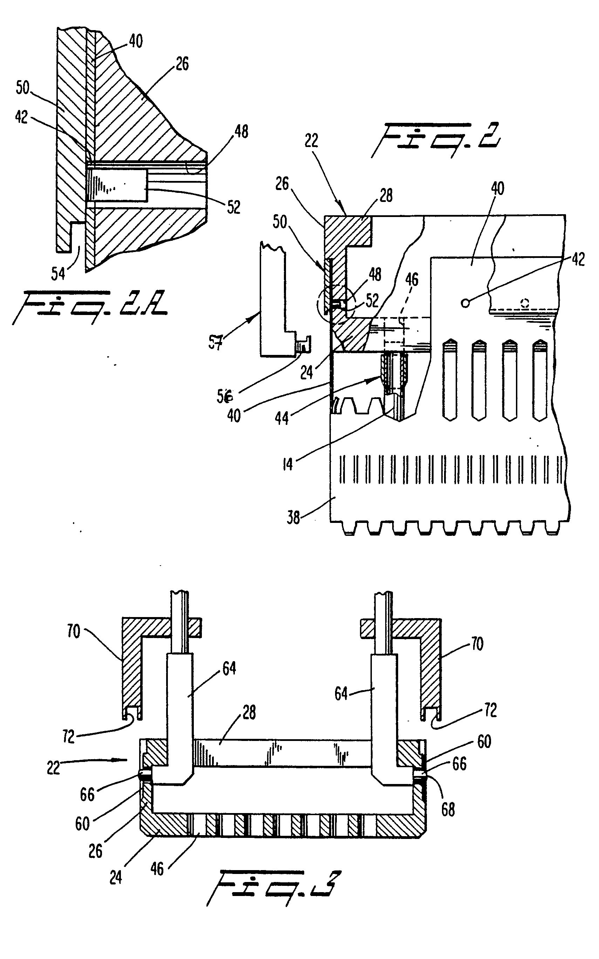

As seen best from Fig. 2A, each tang 50 has formed in the lower edge thereof a notch 54 for receiving a hook portion 56 of a pull-back tool 57 (Fig. 2). When it is desired to remove the top nozzle 22, the pull-back tool 57 is used to pull the tangs 50 back far enough for their pins 52 to clear the associated apertures 48 and 42, whereupon the top nozzle will be free to be lifted off the guide thimbles 14. To remount the top nozzle, it is lowered to slip the guide thimble upper end portions into the respective passageways 46 in the adapter plate 24 while the tangs 50 are being pulled back until the upper edges of the skirt portions 40 have slipped beneath the pins 52, whereupon the tangs can be released to enable their pins 52 to snap into the associated apertures 42 and 48 when these become properly aligned with each other as the top nozzle settles upon the load collars 44.

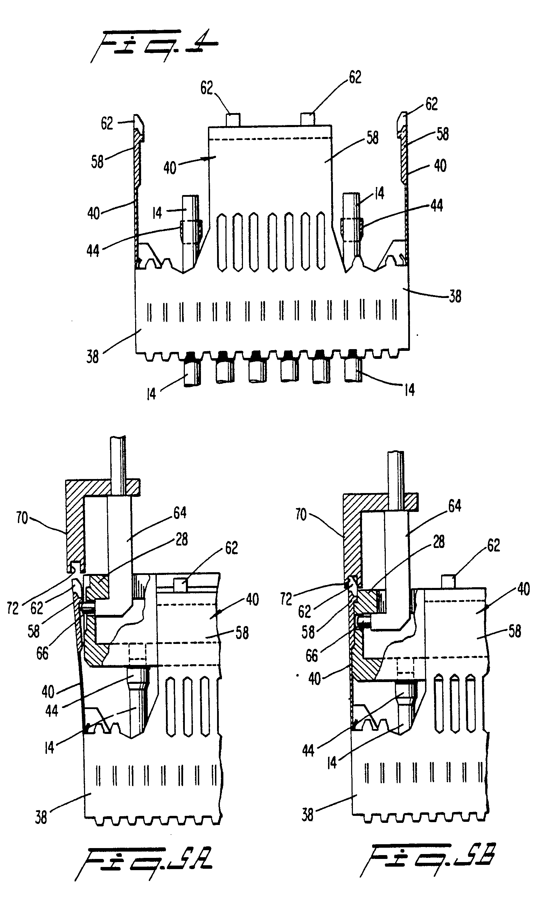

Turning now to Figs. 3 to 5b, they illustrate a further embodiment of the invention in which each upward extension or skirt portion 40 of the spacer grid 38 terminates in a tang 58 having an upper hook portion designed to engage a complementary slot 60 in the adjacent sidewall 26 of the top nozzle 22 so as to interlock the latter with the top spacer grid 38. Each tang 58 has two upward projections 62 formed thereon for a purpose to be set forth hereinbelow.

Formed through each sidewall 26 of the top nozzle is a hole 68 which terminates behind the associated tang 58, when the top nozzle is in place, and which is adapted to have inserted therein a pin-like deflecting portion 66 of a combination releasing-and-lifting tool 64. The pin-like deflecting portion 66 is long enough to project from the hole 68, when fully inserted therein, and to deflect the tang 58 out of interlocking engagement with the slot 60, as seen from Fig. 5A. When the tangs 58 of all skirt portions 40 are thus deflected and disengaged, the top nozzle is free to be lifted from the guide thimbles 14.

The combination releasing-and-lifting tool 64 includes further a tang capturing portion 70 having a notch 72 formed in the lower end thereof and adapted to be engaged with the upward projections 62 of the respective tang 58 when the tool is to be used for the purpose of lifting the fuel assembly as a whole. In Fig. 5B, the tang capturing portion 70 is shown engaged with the upward projections 62 of the tang 58 whilst the outwardly angled releasing portion of the tool with its deflecting portion 66 is withdrawn from the tang 58 but still underlies the lateral flange 28 on the adjacent adapter-plate sidewall. When thus positioned, the tool 64 can be used to bodily lift the fuel assembly as the engaged tang capturing portion 70 is keeping the tang 58 positively interlocked with the top nozzle.

**Claims**

1. A nuclear fuel assembly (10) having longitudinally extending control-rod guide thimbles (14), a transversely extending spacer grid (38), a top nozzle (22), and an attaching structure for removable mounting the top nozzle on the fuel assembly, wherein the top nozzle (22) includes a transversely extending plate (24) having an aperture (46) formed therein, said attaching structure comprising first means (44) for transferring compressive loads on the fuel assembly through said top nozzle (22) direct to said guide thimbles (14), and second means (40, 42, 48, 50, 52; 40, 58, 60) for transferring tensive loads on the fuel assembly through said top nozzle (22) to said guide thimbles (14), characterized in-that said guide thimbles (14) are slip-fit into said aperture (46), and said first means comprises a collar (44) fixedly disposed on the guide thimbles and engaging the underside of said transversely extending plate (24) so as to support the top nozzle and that said second means comprise an upwardly extending skirt portion (40) on said spacer grid (38), and interlocking means (42, 48, 50, 52; 58, 60) for releaseably locking said skirt portion (40) to the top nozzle and transferring tensive loads therebetween.

2. A nuclear fuel assembly according to claim 1, characterized in that said interlocking means (42, 48, 50) comprise an aperture (42) formed in said skirt portion (40), and a tang (50) disposed on the top nozzle (22) alongside a sidewall (26) thereof, said skirt portion extending between the tang and said sidewall, and said tang (50) carrying a pin (52) withdrawably engaged in said aperture (42).

3. A nuclear fuel assembly according to claim 2, characterized in that said sidewall (26) has an aperture (48) which is aligned with said aperture (42) in the skirt portion (40), said pin (52) extending through the aperture (42) in the skirt portion and into the aperture (48) in said sidewall.

4. A nuclear fuel assembly according to claim 2 or 3, characterized in that said tang (50) is formed of spring steel.

5. A nuclear fuel assembly according to claim 1, characterized in that said interlocking means (58, 60) comprise a slot (60) formed in a sidewall (26) of the top nozzle (22), and a tang (58) formed on said skirt portion (40) and releasably engaged with said slot (60).

6. A nuclear fuel assembly according to claim 5, characterized in that said sidewall (26) has a hole (68) formed therethrough at said slot (60) and adjacent a lateral flange (28) of the top nozzle for receiving a releasing portion (66) of a tool (64) adapted to be manipulated to insert said releasing portion (66) through said hole (68) so as to push said tang (58) out of engagement with said slot (60).

7. A nuclear fuel assembly according to claim 6, characterized in that said tang (58) has an upward projection (62) cooperable with a tang capturing portion (70) of said tool (64) for holding the tang positively engaged with said slot (60) while the tool is manipulated to cause said releasing portion (66) thereof in cooperation with said lateral flange (28) to bodily lift the fuel assembly.

8. A nuclear fuel assembly according to claim 5, 6 or 7, characterized in that said tang (58) is formed of spring steel.

## Patentansprüche

1. Kernbrennelement (10) mit längsverlaufenden Steuerstabführungsrohren (14), einem querverlaufenden Abstandhaltegitter (38), einem oberen Endstück (22), und einer Befestigungskonstruktion zur abnehmbaren Montage des oberen Endstücks auf dem Brennelement, wobei das obere Endstück (22) eine querverlaufende Platte (24) mit einer darin gebildeten Öffnung (46) aufweist und die Befestigungskonstruktion erste Mittel (44) zum Übertragen von auf das Brennelement wirkenden Druckkräften über das obere Endstück (22) direkt auf die Führungsrohre (14), und zweite Mittel (40, 42, 48, 50, 52; 40, 58, 60) zum Übertragen von auf das Brennelement wirkenden Zugkräften über das obere Endstück (22) auf die Führungsrohre (14) enthält, dadurch gekennzeichnet, daß die Führungsrohre (14) in die Öffnung (46) eingesteckt sind und daß die ersten Mittel eine fest auf den Führungsrohren sitzende Manschette (44) aufweisen, die an der Unterseite der querverlaufenden Platte (24) so anliegen, daß sie das obere Endstück abstützen, und daß die zweiten Mittel einen nach oben ragenden Randansatz (40) des Abstandhaltegitters (38) und Arretierungsmittel (42, 48, 50, 52; 58, 60) zum lösbaren Arretieren des Randansatzes (40) an dem oberen Endstück und zur Übertragung von Zugkräften zwischen ihnen aufweisen.

2. Kernbrennelement nach Anspruch 1, dadurch gekennzeichnet, daß die Arretierungsmittel (42, 48, 50) eine in dem Randansatz (40) gebildete Öffnung (42) und eine am oberen Endstück entlang einer Seitenwand (26) derselben angeordnete Lasche aufweisen, wobei der Randansatz zwischen der Lasche und der Seitenwand verläuft und die Lasche (50) einen Zapfen (52) trägt, der herausziehbar in die Öffnung (42) eingreift.

3. Kernbrennelement nach Anspruch 2, dadurch gekennzeichnet, daß die Seitenwand (26) eine Öffnung (48) aufweist, die mit der genannten Öffnung (42) des Randansatzes (40) fluchtet, und der Stift (42) durch die Öffnung (42) des Randansatzes in die Öffnung (48) der Seitenwand eingreift.

4. Kernbrennelement nach Anspruch 2 oder 3, dadurch gekennzeichnet, daß die Lasche (50) aus Federstahl gebildet ist.

5. Kernbrennelement nach Anspruch 1, dadurch gekennzeichnet, daß die Arretierungsmittel (58, 60) einen in einer Seitenwand (26) des oberen Endstücks (20) gebildeten Schlitz (60) und eine an dem Randansatz (40) gebildete Lasche (58) aufweisen, die lösbar in den Schlitz (60) eingreift.

6. Kernbrennelement nach Anspruch 5, dadurch gekennzeichnet, daß die Seitenwand (26) eine im Bereich des Schlitzes (60) und neben einem seitlichen Flansch (28) des oberen Endstücks gebildete Durchgangsbohrung (68) zur Aufnahme eines Löseteils (66) eines Werkzeugs (64) aufweist, das mit seinem Löseteil (66) durch die Durchgangsbohrung (68) einführbar und im Sinne eines Wegdrückens der Lasche (58) außer Eingriff mit dem Schlitz (60) handhabbar ist.

7. Kernbrennelement nach Anspruch 6, dadurch gekennzeichnet, daß die Lasche (58) einen nach oben vorspringenden Teil (62) aufweist, der mit einem Laschenhalteteil (70) des Werkzeugs (64) zum Halten der Lasche in formschlüssigem Eingriff mit dem Schlitz (60) zusammenwirkungsfähig ist, während das Werkzeug im Sinne eines Anhebens des Brennelements mit dem mit dem seitlichen Flansch (28) zusammenwirkenden Löseteil (66) betätigt wird.

8. Kernbrennelement nach Anspruch 5, 6 oder 7, dadurch gekennzeichnet, daß die Lasche (58) aus Federstahl gebildet ist.

## Revendications

1. Assemblage combustible nucléaire (10) comportant des tubes-guides (14) de barres de commande s'étendant longitudinalement, une grille d'espacement (38) s'étendant transversalement, un embout supérieur (22) et une structure de fixation pour monter de façon démontable l'embout supérieur sur l'assemblage combustible, dans lequel l'embout supérieur (22) comprend une plaque (24) s'étendant transversalement et dans laquele est formée une ouverture (46), cette structure de fixation comprenant un premier moyen (44) pour transfèrer les efforts de compression exercés sur l'assemblage combustible par l'intermédiaire de l'embout supérieur (22) directement aux tubes-guides (14) et des seconds moyens (40, 42, 48, 50, 52; 40, 58, 60) pour transfèrer les efforts de traction exercés sur l'assemblage combustible par l'intermédiaire de l'embout supérieur (22) aux tubes-guides (14), caractérisé par le fait que les tubes-guides (14) sont ajustés à frottement doux dans l'ouverture (46) et le premier moyen comprend un collet (44) disposé fixement sur les tubes-guides et portant contre le côté de dessous de la plaque (24) s'étendant transversalement, de manière à supporter l'embout supérieur, et que les seconds moyens comprennent une jupe (40) s'étendant vers le haut sur la grille d'espacement (38) et des moyens (42, 48, 50, 52; 58-60) d'enclenchement mutuel pour enclencher de façon libérable la jupe (40) sur l'embout supérieur et pour transfèrer les efforts de traction entre cette jupe et cet embout.

2. Assemblage combustible nucléaire selon la revendication 1, caractérisé par le fait que les moyens (42, 48, 50) d'enclenchement mutuel comprennent une ouverture (42) formée dans la jupe (40) et une languette (50) disposée sur l'embout supérieur (22), le long de sa paroi latérale (26), la jupe s'étendant entre la languette et la paroi latérale et la languette (50) portant un ergot (52) introduit de façon rétractable dans l'ouverture (42).

3. Assemblage combustible nucléaire selon la revendication 2, caractérisé par le fait que la paroi latérale (26) comporte une ouverture (48) qui est alignée avec l'ouverture (42) de la jupe (40), l'ergot (52) s'étendant à travers l'ouverture (42) de la jupe et pénétrant dans l'ouverture (48) de la paroi latérale.

4. Assemblage combustible nucléaire selon la revendication 2 ou 3, caractérisé par le fait que la languette (50) est en acier à ressort.

5. Assemblage combustible nucléaire selon la revendication 1, caractérisé par le fait que les moyens (58, 60) d'enclenchement mutuel comprennent une fente (60) formée dans la paroi latérale (26) de l'embout supérieur (22) et une languette (58) formée dans la jupe (40) et engagée de façon libérable dans la fente (60).

6. Assemblage combustible nucléaire selon la revendication 5, caractérisé par le fait que la paroi latérale (26) comporte un trou (68) qui traverse celle-ci à l'endroit de la fente (60) et à proximité d'un rebord latéral (28) de l'embout supérieur afin de recevoir la partie de dégagement (66) d'un outil (64) adapté pour être manipulé de manière que cette partie de dégagement (66) pénètre dans le trou (68) afin de pousser la languette (58) hors de la fente (60).

7. Assemblage combustible nucléaire selon la revendication 6, caractérisé par le fait que la languette (58) comporte une saillie (62) dirigée vers le haut et coopérant avec une partie (70) d'interception de languette de l'outil (64) pour maintenir la languette en prise positive avec la fente (60) pendant que l'on manipule l'outil pour faire en sorte que la partie de dégagement (66) de ce dernier, en coopération avec le rebord latéral (28), soulève d'un seul bloc l'assemblage combustible.

8. Assemblage combustible nucléaire selon la revendication 5, 6 ou 7, caractérisé par le fait que la languette (58) est formée en acier à ressorts.

Fig.1

Fig.2

Fig.2A

Fig.3

Fig.4

62 · 62

62

58

40 58

40

14

14

44

44

38

38

14

14

70 · 64 · 28 · 62 · 40 · 58

70 · 64 · 28 · 62 · 40 · 58

72 · 62 · 58 · 66

72 · 62 · 58 · 66

40 · 44 · 14

40 · 44 · 14

38

38

Fig.5A

Fig.5B